# EUROPÄISCHE PATENTSCHRIFT

(11) **EP 4 078 101 B1**
(45) Veröffentlichungstag und Bekanntmachung des Hinweises auf die Patenterteilung: **05.02.2025**
(21) Anmeldenummer: 20817301.3
(22) Anmeldetag: 01.12.2020
(51) Int. Cl.: G01F 1/684, G01F 1/688, G01F 15/00, G01K 1/16, G01F 23/24, G01K 7/16

(54) **MESSGERÄT**
MEASURING DEVICE
DISPOSITIF DE MESURE

(30) Priorität: 16.12.2019 DE 102019134440
(43) Veröffentlichungstag der Anmeldung: 26.10.2022
(73) Patentinhaber: Endress+Hauser Wetzer GmbH+Co. KG, 87484 Nesselwang (DE)
(72) Erfinder: BRÜNDL, Harald, 85247 Schwabhausen (DE)
(74) Vertreter: Koslowski, Christine Adelheid
(86) Internationale Anmeldenummer: PCT/EP2020/084123
(87) Internationale Veröffentlichungsnummer: WO 2021/121972

(56) Entgegenhaltungen:
- WO-A1-2019/015912
- WO-A1-2019/048210
- DE-A1- 102017 100 267

## Beschreibung

Die Erfindung bezieht sich auf eine Vorrichtung zur Bestimmung und/oder Überwachung einer Prozessgröße eines Mediums. Das Medium befindet sich vorzugsweise in einem Behältnis, beispielsweise in einem Behälter oder in einer Rohrleitung.

Derartige Feldgeräte dienen der Überwachung und/oder Bestimmung mindestens einer, beispielsweise chemischen oder physikalischen, Prozessgröße eines Mediums. Im Rahmen der vorliegenden Anmeldung werden im Prinzip alle Messgeräte als Feldgerät bezeichnet, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von Firmen der Endress + Hauser-Gruppe hergestellt und vertrieben.

Typischerweise umfasst ein Feldgerät zumindest eine zumindest teilweise und zumindest zeitweise mit dem Prozess in Berührung kommende Sensoreinheit und eine Elektronikeinheit, welche beispielsweise der Signalerfassung, -auswertung und/oder - speisung dient. Zumindest die Elektronikeinheit des jeweiligen Feldgeräts ist typischerweise in einem Gehäuse mit einer Gehäuseeinführung angeordnet zur Einführung zumindest eines Anschlusskabels an das Feldgerät angeordnet.

Beispiele für Feldgeräte sind Füllstandsmessgeräte, Durchflussmessgeräte, Druck- und Temperaturmessgeräte, pH- und/oder pH-Redoxpotentialmessgeräte, oder auch Leitfähigkeitsmessgeräte, welche der Erfassung der jeweils entsprechenden Prozessgrößen Füllstand, Durchfluss, Druck, Temperatur, dem pH-Wert, Redoxpotential, oder der Leitfähigkeit dienen. Die jeweils zugrunde liegenden Messprinzipien sind aus dem Stand der Technik hinlänglich bekannt, und werden an dieser Stelle nicht einzeln angeführt. Bei Durchflussmessgeräten handelt es sich insbesondere um Coriolis-, Ultraschall-, Vortex-, thermische und/oder magnetisch induktiven Durchflussmessgeräte. Füllstandsmessgeräte wiederum sind insbesondere Mikrowellen-, Ultraschall-, zeitbereichsreflektometrische (TDR), radiometrische, kapazitive, konduktive und/oder vibronische Füllstandsmessgeräte. Bei Druckmessgeräten dagegen handelt es sich beispielsweise um sogenannte Absolut-, Relativ- oder Differenzdruckgeräte.

Ohne Beschränkung der Allgemeinheit fokussiert die nachfolgende Beschreibung allerdings auf Feldgeräte in Form von Thermometern. Die nachfolgenden Überlegungen sind jeweils auf andere Feldgeräte, insbesondere auf thermische Durchflussmessgeräte zur Bestimmung eines Durchflusses und/oder einer Strömungsgeschwindigkeit eines Mediums durch eine Rohrleitung, welche ebenfalls zumindest eine Sensoreinheit mit einem temperaturempfindlichen Sensorelement, beispielsweise in Form eines Temperatursensors, umfassen, übertragbar.

Thermometer sind in unterschiedlichsten Ausgestaltungen aus dem Stand der Technik bekannt geworden und deren zugrundeliegende Messprinzipien sind jeweils ebenfalls ausführlich beschrieben worden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials mit der Temperatur in Zusammenhang bringen, wie beispielsweise bei Verwendung von Widerstandselementen oder Thermoelementen. Dagegen wird bei Strahlungsthermometern, insb. Pyrometern, zur Bestimmung der Temperatur einer Substanz deren Wärmestrahlung ausgenutzt.

Bei einem Temperatursensor in Form eines sogenannten Dünnschicht-Sensors, insbesondere eines Resistance Temperature Detectors (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden dabei sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Die Widerstandselemente werden häufig mittels eines Lötverfahrens, insbesondere mittels einer SMD-Lötung, innerhalb eines Sensorkopfes, beispielsweise eine Fühlerspitze, und insbesondere auf den Innenboden einer z. B. aus Edelstahl bestehenden Hülse, eingebracht. Verfahren zum Herstellen einer derartigen Lotverbindung für ein Thermometer sind beispielsweise aus den Offenlegungsschriften DE102006048448A1 oder DE102015112199A1 bekannt geworden. Die Herstellung einer Lotverbindung geht vorteilhaft mit einer hohen mechanischen Stabilität des jeweiligen Thermometers einher. Grundsätzlich hat die Lotverbindung aber auch einen großen Einfluss auf die thermischen Eigenschaften des Thermometers, insbesondere auf die thermische Ankopplung zwischen Widerstandselement und Sensorkopf.

Das betrifft insbesondere die Güte bzw. Qualität der jeweiligen Lötstelle, sowie deren Reproduzierbarkeit. Beispielsweise sollte gewährleistet sein, dass für jede Lötstelle stets die gleiche Menge an Lot verwendet wird. Mit Hinblick auf die Güte bzw. Qualität spielt unter anderem die Benetzung des Lotes auf der jeweiligen Oberfläche eine wichtige Rolle. Weiterhin sind die Stabilität der Lotverbindung, sowie die geometrische Verteilung des Lots zwischen den beiden Bauteilen von zentraler Bedeutung. Es sei darauf verwiesen, dass diese Auflistung keinesfalls abschließend ist. Vielmehr sind beispielhaft einige mögliche Aspekte genannt, welche die thermischen Eigenschaften des Thermometers negativ beeinflussen können.

Der vorliegenden Erfindung liegt somit die Aufgabe zugrunde, eine Vorrichtung bereitzustellen, welche eine hohe mechanische Stabilität aufweist.

Diese Aufgabe wird gelöst durch eine Vorrichtung zur Bestimmung und/oder Überwachung zumindest einer Prozessgröße eines Mediums umfassend zumindest ein Sensorelement und eine Einheit umfassend zumindest teilweise ein Material mit anisotroper Wärmeleitfähigkeit. Erfindungsgemäß ist die Einheit kraftschlüssig mit dem Sensorelement verbunden, und ist die Einheit kraftschlüssig auf einer Oberfläche des Sensorelements befestigt.

Die Verwendung von Einheiten umfassend Materialien mit anisotroper Wärmeleitfähigkeit ist beispielsweise aus der DE102017100267A1 im Zusammenhang mit einer Vorrichtung bekannt geworden, bei der zwei Sensorelemente in einem einzigen Sensorkopf zu jedem Zeitpunkt im thermischen Gleichgewicht gehalten werden. Eine ähnliche Idee wird in DE102017116408A1 in Zusammenhang mit einem thermischen Durchflussmessgerät verfolgt. Auf beide Anmeldungen wird hinsichtlich der Einheit vollumfänglich Bezug genommen. Im Rahmen der vorliegenden Erfindung wird eine solche Einheit dagegen dazu ausgenutzt, gleichzeitig eine gute mechanische Stabilität der Vorrichtung, insbesondere bei gleichzeitig guten thermischen Eigenschaften zu gewährleisten. Die Einheit umfassend das Material mit anisotroper Wärmeleitfähigkeit dient der kraftschlüssigen Verbindung des Sensorelements und sorgt darüber hinaus für eine gleichmäßige Verteilung der Wärme, insbesondere für das Vorliegen eines thermischen Gleichgewichts. Vorteilhaft werden durch die erfindungsgemäße Lösung auch thermisch induzierte, mechanische Verspannung, welche beispielsweise aus unterschiedlichen thermischen Ausdehnungskoeffizienten der unterschiedlichen, jeweils verwendeten Materialien, deutlich reduziert. Die Erfindung betrifft eine Vorrichtung zur Bestimmung und/ oder Überwachung einer Prozessgröße eines Mediums nach Anspruch 1.

Eine Ausgestaltung der Erfindung beinhaltet, dass es sich bei dem Sensorelement um einen Temperatursensor handelt. Bei der Vorrichtung handelt es sich in diesem Falle beispielsweise um ein Thermometer oder um ein nach dem thermischen Messprinzip arbeitendes Durchflussmessgerät.

Eine erfindungsgemäße Vorrichtung kann aber auch über mehr als ein Sensorelement verfügen. In diesem Falle sind vorzugsweise zumindest zwei Sensorelemente mit einer einzigen Einheit umfassend ein Material mit anisotroper Wärmeleitfähigkeit kraftschlüssig verbunden. In diesem Falle sind die zumindest zwei Sensorelemente vorteilhaft stets in thermischem Gleichgewicht. Dies ist vorteilhaft insbesondere auch dann gewährleistbar, wenn die zumindest zwei Sensoreinheiten nicht unmittelbar gemeinsam innerhalb der Vorrichtung anordenbar sind, beispielsweise aus konstruktiven Restriktionen heraus.

Es versteht sich von selbst, dass nicht nur mehrere Sensorelemente, sondern auch zumindest ein Sensorelement und zumindest eine weitere Komponente kraftschlüssig mittels einer einzigen Einheit verbindbar sein können. Beispielsweise kann neben einem Sensorelement auch ein Heiz-/Kühlelement und/oder ein Referenzelement, insbesondere zur in situ Kalibrierung des Sensorelements auf derselben Einheit kraftschlüssig befestigt sein.

Die Einheit ist insbesondere in Form eines länglichen Elements ausgestaltet, wobei eine Dicke des Elements klein gegenüber einer Länge und/oder Breite des Elements ist. So ist die Einheit in einer Ausgestaltung der erfindungsgemäßen Vorrichtung eine dünnwandige Folie, welche Folie zumindest teilweise aus dem Material mit anisotroper Wärmeleitfähigkeit besteht. Eine so ausgestaltete Einheit lässt sich besonders platzsparend in eine Sensoreinheit eines Feldgeräts einbringen.

Eine Ausgestaltung der Vorrichtung beinhaltet, dass es sich bei dem Material mit anisotroper Wärmeleitfähigkeit um ein zumindest teilweise Kohlenstoff enthaltendes Material, insbesondere Graphit, oder um hexagonales Bornitrid handelt. Vorzugsweise. Die Einheit weist bevorzugt entlang ihrer Längsachse eine höhere Wärmeleitfähigkeit auf, als senkrecht dazu.

Eine Ausgestaltung der Erfindung beinhaltet, dass zumindest ein Loch in die Einheit eingebracht ist. Mittels des Lochs kann die Einheit kraftschlüssig mit dem zumindest einen Sensorelement verbunden werden.

Eine weitere Ausgestaltung sieht vor, dass die Einheit zumindest in einem ersten Teilbereich, in welchem die kraftschlüssige Verbindung mit dem Sensorelement herstellbar ist, einen ersten Durchmesser aufweist, welcher geringer ist als ein zweiter Durchmesser der Einheit in einem zweiten Teilbereich, welcher sich von dem ersten Teilbereich unterscheidet. Insbesondere ist der erste Durchmesser kleiner als ein Durchmesser des Sensorelements in den restlichen Bereichen.

In einer Ausgestaltung umfasst die Vorrichtung Befestigungsmittel zur Herstellung der kraftschlüssigen Verbindung.

In dieser Hinsicht ist es von Vorteil, wenn die Befestigungsmittel eine Schraube, eine Niete oder eine Klemme umfassen. Beispielsweise können die Befestigungsmittel im Falle einer Einheit, welche in Loch aufweist, dazu dienen, die Einheit durch das Loch hindurch an dem Sensorelement zu befestigen. Analog ist im Falle einer Einheit mit abschnittsweise reduziertem Durchmesser eine Befestigung um die Einheit herum denkbar, beispielsweise mittels einer geeignet ausgestalteten Klemme.

Eine alternative Ausgestaltung beinhaltet, dass die Befestigungsmittel ein Lot umfassen, insbesondere aus einem Lot bestehen. Neben einer üblichen Lotverbindung der Einheit mit dem Sensorelement ist es ebenfalls denkbar, dass das Lot im Falle einer Einheit mit einem Loch durch das Loch hindurchreicht, und eine mit der einer Niete vergleichbare Wirkung erzielt, oder dass das Lot im Falle einer Einheit mit abschnittsweise reduziertem Durchmesser wie eine Klemme wirkt. Derartige Ausgestaltungen sind insbesondere dann von Vorteil, wenn das Sensorelement und/oder die Einheit eine vergleichbar geringe Benetzbarkeit aufweisen, so dass eine übliche Lotverbindung nicht zu einer zuverlässigen, kraftschlüssigen Verbindung führen kann. Diese Überlegungen gelten analog auch für eine erfindungsgemäße Befestigung, in diesem Fall im Vergleich zu einer herkömmlichen Klebeverbindung, die auf der Ausbildung einer Haftkraft zwischen den jeweils zu verbindenden Komponenten basiert.

Eine Ausgestaltung der Vorrichtung beinhaltet, dass die Einheit in Form einer, insbesondere dünnwandigen, biegsamen, Folie ausgestaltet ist, wobei die Einheit in einem ersten Endbereich an dem Sensorelement befestigt ist.

In diesem Zusammenhang ist es von Vorteil, wenn die Folie derart angeordnet und/oder ausgestaltet ist, dass sie ausgehend von dem an dem Sensorelement befestigten ersten Endbereich das Sensorelement umgibt, insbesondere um das Sensorelement herumgewickelt ist. In diesem Fall dient die Folie der Herstellung eines thermischen Gleichgewichts in einem das Sensorelement umgebenden Volumen, indem Wärme in einer Richtung parallel zu der Folie fließt. Bei einem Einbringen des Sensorelements mit der Einheit in ein Sensorgehäuse, insbesondere einen Sensorkopf, wird durch die Wicklung der Einheit um das Sensorelement herum eine Rückstellkraft der Einheit hervorgerufen, welche für eine stabile Positionierung innerhalb des Gehäuses bzw. Sensorkopfes führt. Bei einem derartigen Sensorgehäuse kann es sich insbesondere um ein Schutzrohr für ein Thermometer handeln.

Es ist ferner von Vorteil, wenn die Einheit in einem zweiten Endbereich kraftschlüssig an einer weiteren Komponente der Vorrichtung, insbesondere in einem Sensorgehäuse, in welchem das Sensorelement angeordnet ist, oder an einem Trägerelement, an welchem das Sensorelement angeordnet ist, befestigt ist. Bei dem Sensorgehäuse kann es sich beispielsweise um einen Sensorkopf handeln. Im Falle eines Thermometers kann es sich bei dem Sensorgehäuse um ein Schutzrohr handeln. Im Falle eines Trägerelements kann es sich insbesondere um ein flächiges Element handeln, an welchem zumindest das Sensorelement angeordnet ist, und mittels welchem das Sensorelement an einem das Medium enthaltenden Behältnisses befestigbar ist.

Die Einheit dient sowohl der mechanischen Befestigung des Sensorelements an der weiteren Komponente als auch zur Gewährleistung einer optimalen, insbesondere gleichmäßigen Wärmeverteilung aus dem Prozess. Es kann also eine einfach zu realisierende kraftschlüssige Verbindung zwischen dem Sensorelement und der weiteren Komponente gewährleistet werden, durch welche keine nachteilige Beeinflussung der thermischen Eigenschaften hervorgerufen wird. Zudem können mechanische Spannungen und Kräfte auf das Sensorelement durch die Verwendung der Einheit zur Herstellung der kraftschlüssigen Verbindung minimiert oder sogar eliminiert werden. In einer alternativen Ausgestaltung ist die Einheit in Form einer, insbesondere dünnwandigen, biegsamen, Folie ausgestaltet, wobei die Einheit in einem mittleren Bereich an dem Sensorelement befestigt ist.

In diesem Zusammenhang ist es wiederum von Vorteil, wenn die Folie ausgehend von dem an dem Sensorelement befestigten mittleren Bereich auf zwei einander gegenüberliegenden Seiten des Sensorelements, zumindest teilweise um das Sensorelement herum angeordnet ist. Ähnlich wie im Falle einer Befestigung in einem Endbereich der Einheit kann auf diese Weise erreicht werden, dass die Einheit für eine gleichmäßige Wärmeverteilung in einem das Sensorelement umgebenden Volumens zu erreichen. Insbesondere kann mittels der Einheit ein thermisches Gleichgewicht des Sensorelements, der Einheit und zumindest einen weiteren Komponente der Vorrichtung erreicht werden.

Zusammenfassend können durch die vorliegende Erfindung thermische Übergangswiderstände innerhalb eines Feldgeräts verringert werden, wobei gleichzeitig eine hohe mechanische Stabilität gewährleistbar ist. Insbesondere können anderweitig auftretende mechanische Spannungen in Folge unterschiedlicher Wärmeausdehnungskoeffizienten unterschiedlicher Materialien vermieden werden.

Die Erfindung wird anhand der nachfolgenden Zeichnungen näher erläutert. Es zeigt:
Fig. 1: eine schematische Darstellung eines Thermometers mit einem in einem Sensorkopf angeordneten Sensorelement in Form eines Temperatursensors gemäß Stand der Technik,
Fig. 2: zwei Ausgestaltungen einer erfindungsgemäßen Vorrichtung mit (a) einer in einem Endbereich und (b) in einem mittleren Bereich an einem Sensorelement befestigten Einheit;
Fig. 3: bevorzugte Ausgestaltungen zur Herstellung einer kraftschlüssigen Verbindung unter Zuhilfenahme eines Lots; und
Fig. 4 eine Ausgestaltung einer erfindungsgemäßen Vorrichtung mit einer an einem Sensorelement und an einem Sensorgehäuse befestigten Einheit.

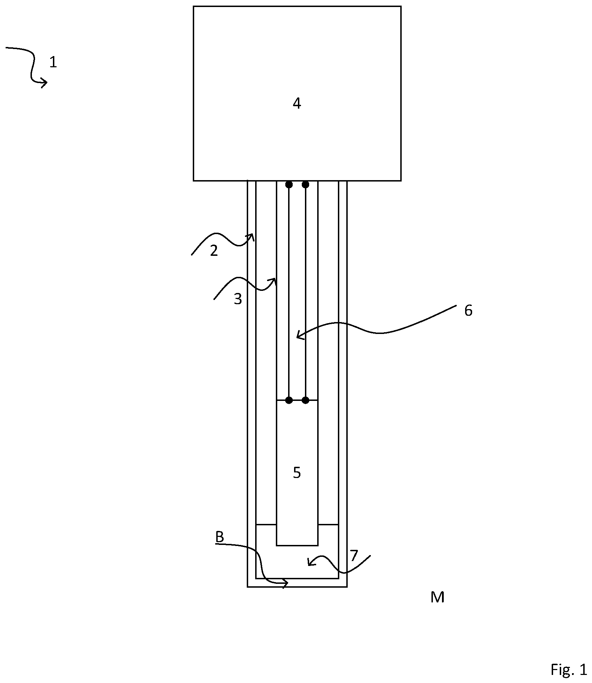

In Fig.1 ist eine schematische Abbildung eines Thermometers 1 mit einem Eintauchkörper bzw. einem Schutzrohr 2, einem Messeinsatz 3, und einer Elektronik 4 gemäß Stand der Technik gezeigt. Der Messeinsatz 3 ist in den Eintauchkörper 2 eingebracht und umfasst ein Sensorelement 5, welches im vorliegenden Fall ein Temperatursensor in Form eines Widerstandselements ist, der über die Anschlussleitungen 6 elektrisch kontaktiert und mit einer Elektronik 4 verbunden ist. Das Sensorelement 5 muss aber nicht notwendiger weise Teil eines Messeinsatzes 3 sein. In anderen Ausgestaltungen kann die Elektronik 4 darüber hinaus auch separat vom Messeinsatz 3 und Eintauchkörper 2 angeordnet sein. Auch muss es sich bei dem Sensorelement 5 nicht notwendigerweise um ein Widerstandselement handeln, oder die Anzahl der verwendeten Anschlussleitungen 6 muss nicht notwendigerweise zwei betragen. Vielmehr kann je nach angewendetem Messprinzip eine unterschiedliche Anzahl von Anschlussdrähten 6 verwendet werden.

Das Sensorelement 5 ist kraftschlüssig durch eine Lotverbindung in einem Innenvolumen des Messeinsatzes 2 an einer dem Medium M zugewandten Bodenfläche B des Messeinsatzes 2 befestigt. Wie bereits in der Einleitung dargelegt, ist eine derartige Verbindung mit hohen fertigungstechnischen Anforderungen verbunden. Die Qualität und Reproduzierung der Lotverbindung beeinflussen in hohem Maße die thermischen Eigenschaften der Vorrichtung 1.

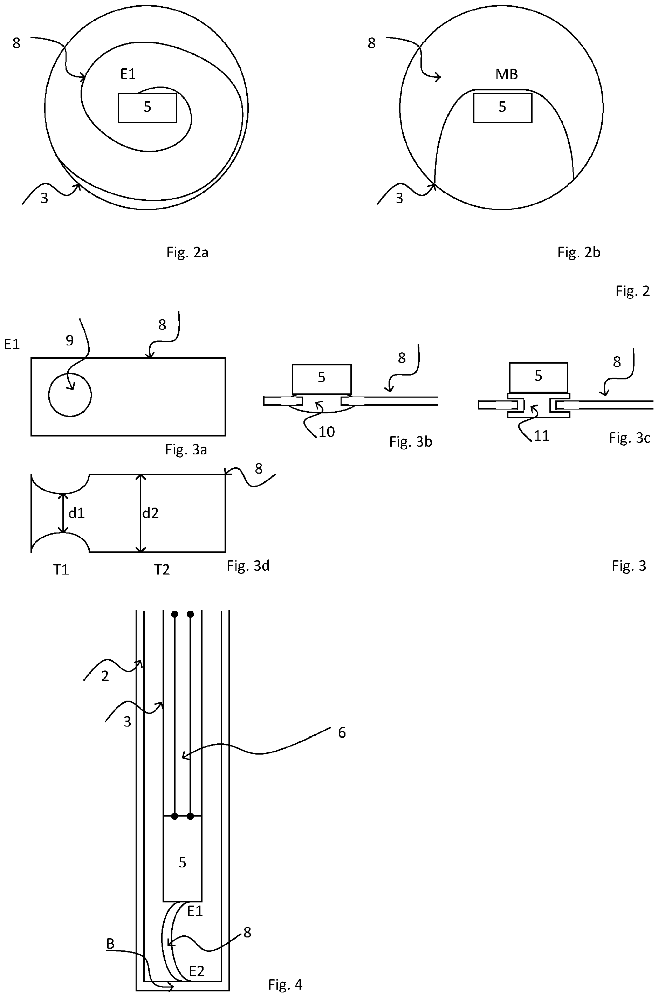

Zur Bereitstellung einer hohen mechanischen Stabilität bei gleichzeitig guten thermischen Eigenschaften wird erfindungsgemäß eine Einheit 8 umfassend ein Material mit anisotroper Wärmeleitfähigkeit kraftschlüssig mit dem Sensorelement 3 verbunden, wie für zwei beispielhafte Ausgestaltungen einer erfindungsgemäßen Vorrichtung in Fig. 2 illustriert. In beiden, sowie für die noch folgenden, gezeigten Ausgestaltungen ist die Einheit 8 jeweils ohne Beschränkung der Allgemeinheit in Form einer dünnwandigen Folie aus einem Material mit anisotroper Wärmeleitfähigkeit, beispielsweise Graphit, hergestellt.

Für die Ausgestaltung gemäß Fig. 2a ist die Einheit 8 in Fig. 2a in einem Endbereich E1 an dem Sensorelement 5 befestigt und um das Sensorelement 5 herumgewickelt. Bei der in Fig. 2b dargestellten Ausgestaltung ist die Einheit 8 dagegen in einem mittleren Bereich MB an dem Sensorelement 5 befestigt und umgibt das Sensorelement 5 auf zwei einander gegenüberliegenden Seiten. In beiden Fällen ist die Einheit 8 zumindest teilweise um das Sensorelement 5 herum angeordnet und umgibt das Sensorelement 5 zumindest teilweise. Auf diese Weise kann ein schneller Wärmetransport vom Medium M zum Sensorelement 5, und damit eine homogene Wärmeverteilung innerhalb des Schutzrohrs 2 gewährleistet werden, insbesondere befinden sich ein dem Medium M zugewandter Bereich des Schutzrohrs 2, die Einheit 8 und das Sensorelement 5 im thermischen Gleichgewicht.

Zur Herstellung der kraftschlüssigen Verbindung zwischen der Einheit 8 und dem Sensorelement 5 können Befestigungsmittel 10, 11 verwendet werden, wie in Fig. 3 beispielhaft illustriert ist.

Für die in den Figuren Fig 3a-3c dargestellten Ausgestaltungen weist die Einheit 8 ein Loch 9 auf, welches vorliegend beispielhaft im Endbereich E1 angeordnet ist. Die kraftschlüssige Verbindung kann durch das Loch hindurch hergestellt werden. Zur Herstellung der Verbindung können Befestigungsmittel 10,11 verwendet werden, wie in Fig. 3b für den Fall eines Lots 10 und in Fig. 3c für den Fall einer Niete gezeigt. Das Lot 10 wirkt in diesem Falle wie eine Niete 11. Alternativ ist es auch denkbar, dass die Einheit E1 in einem ersten Teilbereich T1 einen geringeren ersten Durchmesser d1 aufweist als ein zweiter Durchmesser d2 der Einheit in einem zweiten Teilbereich T2. In diesem Falle kann das Befestigungsmittel 10,11 beispielsweise in Form einer Klemme ausgestaltet sein [nicht dargestellt], welche im ersten Teilbereich T1 um die Einheit 8 herum geklemmt ist. Die Durchmesser d1 und d2 können dabei in den beiden Teilbereichen T1 und T2 konstant oder auch zumindest abschnittsweise variabel sein.

Es ist zudem auch denkbar, mehrere gleichartige oder unterschiedliche Sensorelemente 5, oder auch zumindest ein Sensorelement 5 und zumindest eine weitere Komponente, beispielsweise ein Heiz-/Kühlelement und/oder ein Referenzelement zur in situ Kalibrierung zumindest eines Sensorelements 5, in unterschiedlichen Bereichen der Einheit 8 anzuordnen. Auch sei darauf verwiesen, dass das Sensorelement 5 und die Einheit 8 nicht zwangsläufig in einem Eintauchkörper 2 angeordnet sein müssen. Beispielsweise ist es ebenfalls denkbar, dass die Einheit 8 und das zumindest eine Sensorelement 5 auf einem Trägerelement angeordnet sind [hier nicht dargestellt]. In diesem Falle ist es auch denkbar, dass die Einheit 8 und das zumindest eine Sensorelement 5 mit der Einheit 8 und dem Trägerelement kraftschlüssig verbunden werden.

Eine Möglichkeit zur Stabilisierung, zum Schutz und/oder zur weiteren thermischen Isolierung kann durch eine Ummantelung des jeweils verwendeten Befestigungsmittels an der jeweiligen Verbindungsstelle bestehen. Die Ummantelung kann dabei beispielsweise eine elastische Beschichtung, ein Verguss oder ein Klebstoff sein.

Eine weitere Ausgestaltung ist in Fig. 4 dargestellt. In dieser Ausgestaltung ist die Einheit 8 ebenfalls in Form einer dünnwandigen Folie ausgestaltet. Sie ist in einem ersten Endbereich E1 kraftschlüssig mit einem Sensorelement 5 und in einem zweiten Endbereich E2 mit einer Bodenfläche eines Schutzrohrs 2 verbunden, in welchem das Sensorelement 5 angeordnet ist. Sie kann alternativ auch mit einer Seitenwandung des Schutzrohrs 2 oder mit einer anderen Komponente der Vorrichtung 1 verbunden werden.

### Bezugszeichenliste

- 1: Thermometer
- 2: Schutzrohr
- 3: Messeinsatz
- 4: Elektronikeinheit
- 5: Sensorelement
- 6: Anschlussleitungen
- 7: Lotverbindung nach Stand der Technik
- 8: Einheit mit einem Material mit anisotroper Wärmeleitfähigkeit
- 9: Loch
- 10: Lot
- 11: Niete

- B: Bodenfläche des Schutzrohrs
- d1,d2: Durchmesser der Einheit
- T1, T2: Teilbereiche der Einheit
- E1, E2: Endbereiche der Einheit
- MB: Mittlerer Bereich der Einheit
- M: Medium
- T: Temperatur

## Patentansprüche

1. Vorrichtung (1) zur Bestimmung und/oder Überwachung zumindest einer Prozessgröße eines Mediums (M) umfassend zumindest ein Sensorelement (5) und eine Einheit (8) umfassend zumindest teilweise ein Material mit anisotroper Wärmeleitfähigkeit,
wobei die Einheit (8) kraftschlüssig auf einer Oberfläche des Sensorelements (5) befestigt ist,
und wobei die Einheit (8) eine dünnwandige Folie ist, welche Folie zumindest teilweise aus dem Material mit anisotroper Wärmeleitfähigkeit besteht,
und wobei die Folie sowohl der kraftschlüssigen Verbindung des Sensorelements dient als auch für eine gleichmäßige Verteilung der Wärme sorgt, insbesondere für das Vorliegen eines thermischen Gleichgewichts.

2. Vorrichtung (1) nach Anspruch 1,
wobei es sich bei dem Sensorelement (5) um einen Temperatursensor handelt.

3. Vorrichtung (1) nach zumindest einem der vorherigen Ansprüche,
wobei es sich bei dem Material mit anisotroper Wärmeleitfähigkeit um ein zumindest teilweise Kohlenstoff enthaltendes Material, insbesondere Graphit, oder um hexagonales Bornitrid handelt.

4. Vorrichtung (1) nach zumindest einem der vorherigen Ansprüche,
wobei zumindest ein Loch (9) in die Einheit (8) eingebracht ist.

5. Vorrichtung (1) nach zumindest einem der vorherigen Ansprüche,
wobei die Einheit (8) zumindest in einem ersten Teilbereich (T1), in welchem die kraftschlüssige Verbindung mit dem Sensorelement (5) herstellbar ist, einen ersten Durchmesser (d1) aufweist, welcher geringer ist als ein zweiter Durchmesser (d2) der Einheit (8) in einem zweiten Teilbereich (T2).

6. Vorrichtung (1) nach zumindest einem der vorherigen Ansprüche,
umfassend an der Einheit (8) angeordnete, zusätzliche Befestigungsmittel (10,11) zur Herstellung der kraftschlüssigen Verbindung.

7. Vorrichtung (1) nach Anspruch 6,
wobei die Befestigungsmittel (10,11) eine Schraube, eine Niete (11) oder eine Klemme umfassen.

8. Vorrichtung (1) nach Anspruch 6,
wobei die Befestigungsmittel (10,11) ein Lot (10) umfassen, insbesondere aus einem Lot (10) bestehen.

9. Vorrichtung (1) nach zumindest einem der vorherigen Ansprüche,
wobei die Einheit (8) in Form einer, insbesondere dünnwandigen, biegsamen, Folie ausgestaltet ist, und wobei die Einheit (8) in einem ersten Endbereich (E1) an dem Sensorelement (5) befestigt ist.

10. Vorrichtung (1) nach Anspruch 9,
wobei die Folie (8) derart angeordnet und/oder ausgestaltet ist, dass sie ausgehend von dem an dem Sensorelement (5) befestigten ersten Endbereich (E1) das Sensorelement (5) umgibt, insbesondere um das Sensorelement (5) herumgewickelt ist.

11. Vorrichtung (1) nach Anspruch 9,
wobei die Einheit (8) in einem zweiten Endbereich (E2) kraftschlüssig an einer weiteren Komponente (2) der Vorrichtung (1), insbesondere mit einem Sensorgehäuse (2), in welchem das Sensorelement (5) angeordnet ist, oder einem Trägerelement, an welchem das Sensorelement (5) angeordnet ist, befestigt ist.

12. Vorrichtung (1) nach zumindest einem der Ansprüche 1 bis 8,
wobei die Einheit (8) in Form einer, insbesondere dünnwandigen, biegsamen, Folie ausgestaltet ist, und wobei die Einheit (8) in einem mittleren Bereich (MB) an dem Sensorelement (5) befestigt ist.

13. Vorrichtung (1) nach Anspruch 12,
wobei die Folie (8) ausgehend von dem an dem Sensorelement (5) befestigten mittleren Bereich (MB) auf zwei einander gegenüberliegenden Seiten des Sensorelements (5), zumindest teilweise um das Sensorelement (5) herum, angeordnet ist.

## Claims

1. A device (1) for determining and/or monitoring at least one process variable of a medium (M) comprising at least one sensor element (5) and a unit (8) made at least partly of a material with anisotropic thermal conductivity,
wherein the unit (8) is secured to a surface of the sensor element (5) by means of a force-fit connection,
and wherein the unit (8) is a thin film, said film consisting at least partly of the material with anisotropic thermal conductivity
and wherein the film serves for the force-fit connection of the sensor element, and also ensures an even distribution of the heat, in particular ensures a thermal equilibrium.

2. The device (1) as claimed in claim 1,
wherein the sensor element (5) is a temperature sensor.

3. The device (1) as claimed in at least one of the preceding claims,
wherein the material with anisotropic thermal conductivity is a material containing at least some proportion of carbon, in particular graphite, or hexagonal boron nitride.

4. The device (1) as claimed in at least one of the preceding claims,
wherein at least one hole (9) is made in the unit (8).

5. The device (1) as claimed in at least one of the preceding claims,
wherein the unit (8) has a first diameter (d1) at least in a first section (T1), in which the force-fit connection to the sensor element (5) can be created, said first diameter being smaller than a second diameter (d2) of the unit (8) in a second section (T2).

6. The device (1) as claimed in at least one of the preceding claims,
comprising additional mounting materials (10, 11) arranged on the unit (8) for creating the force-fit connection.

7. The device (1) as claimed in claim 6,
wherein the mounting materials (10, 11) comprise a bolt, a rivet (11) or a clamp.

8. The device (1) as claimed in claim 6,
wherein the mounting materials (10, 11) comprise a solder (10), in particular consist of a solder (10).

9. The device (1) as claimed in at least one of the preceding claims,
wherein the unit (8) is configured in the form of an, in particular thin and flexible, film, and wherein the unit (8) is secured to the sensor element (5) in a first end area (E1).

10. The device (1) as claimed in claim 9,
wherein the film (8) is arranged and/or configured in such a way that it surrounds the sensor element (5), in particular is wound around the sensor element (5), starting from the first end area (E1) secured to the sensor element (5).

11. The device (1) as claimed in claim 9,
wherein the unit (8) is secured to another component (2) of the device (1) by means of a force-fit connection in a second end area (E2), in particular one with a sensor housing (2) in which the sensor element (5) is arranged, or a carrier element on which the sensor element (5) is arranged.

12. The device (1) as claimed in at least one of claims 1 to 8,
wherein the unit (8) is configured in the form of an, in particular thin and flexible, film, and wherein the unit (8) is secured to the sensor element (5) in a central area (MB).

13. The device (1) as claimed in claim 12,
wherein the film (8) is arranged on two opposite sides of the sensor element (5), at least partly around the sensor element (5), starting from the central area (MB) secured to the sensor element (5).

## Revendications

1. Dispositif (1) destiné à la détermination et/ou à la surveillance d'au moins une grandeur process d'un produit (M), lequel dispositif comprend au moins un élément capteur (5) et une unité (8) comprenant au moins partiellement un matériau à conductivité thermique anisotrope,
l'unité (8) étant fixée par adhérence sur une surface de l'élément capteur (5), et l'unité (8) étant une feuille à paroi mince, laquelle feuille est constituée au moins partiellement du matériau à conductivité thermique anisotrope,
et la feuille servant à la fois à la liaison par adhérence de l'élément capteur et à une répartition uniforme de la chaleur, notamment à la présence d'un équilibre thermique.

2. Dispositif (1) selon la revendication 1,
pour lequel l'élément capteur (5) est un capteur de température.

3. Dispositif (1) selon au moins l'une des revendications précédentes,
pour lequel le matériau à conductivité thermique anisotrope est un matériau contenant au moins partiellement du carbone, notamment du graphite, ou du nitrure de bore hexagonal.

4. Dispositif (1) selon au moins l'une des revendications précédentes,
pour lequel au moins un trou (9) est réalisé dans l'unité (8).

5. Dispositif (1) selon au moins l'une des revendications précédentes,
pour lequel l'unité (8) présente - au moins dans une première zone partielle (T1) dans laquelle la liaison par adhérence avec l'élément capteur (5) peut être réalisée - un premier diamètre (d1) qui est inférieur à un deuxième diamètre (d2) de l'unité (8) dans une deuxième zone partielle (T2).

6. Dispositif (1) selon au moins l'une des revendications précédentes,
lequel dispositif comprend, afin de réaliser la liaison par adhérence, des moyens de fixation supplémentaires (10, 11) disposés sur l'unité (8).

7. Dispositif (1) selon la revendication 6,
pour lequel les moyens de fixation (10, 11) comprennent une vis, un rivet (11) ou une pince.

8. Dispositif (1) selon la revendication 6,
pour lequel les moyens de fixation (10, 11) comprennent une soudure (10), notamment sont constitués d'une soudure (10).

9. Dispositif (1) selon au moins l'une des revendications précédentes,
pour lequel l'unité (8) est conçue sous la forme d'une feuille, notamment à paroi mince et flexible, et
pour lequel l'unité (8) est fixée à l'élément capteur (5) dans une première zone d'extrémité (E1).

10. Dispositif (1) selon la revendication 9,
pour lequel la feuille (8) est disposée et/ou conçue de telle sorte qu'elle entoure l'élément capteur (5) à partir de la première zone d'extrémité (E1) fixée à l'élément capteur (5), notamment qu'elle est enroulée autour de l'élément capteur (5).

11. Dispositif (1) selon la revendication 9,
pour lequel l'unité (8) est fixée par adhérence dans une deuxième zone d'extrémité (E2) à un autre composant (2) du dispositif (1), notamment à un boîtier de capteur (2) dans lequel est disposé l'élément capteur (5), ou à un élément de support sur lequel est disposé l'élément capteur (5).

12. Dispositif (1) selon au moins l'une des revendications 1 à 8,
pour lequel l'unité (8) est réalisée sous la forme d'une feuille, notamment à paroi mince et flexible, et
pour lequel l'unité (8) est fixée à l'élément capteur (5) dans une zone centrale (MB).

13. Dispositif (1) selon la revendication 12,
pour lequel la feuille (8) est disposée, à partir de la zone centrale (MB) fixée à l'élément capteur (5), sur deux côtés opposés de l'élément capteur (5), au moins partiellement autour de l'élément capteur (5).
